# EUROPÄISCHE PATENTANMELDUNG

(11) **EP 1 930 611 A1**
(43) Veröffentlichungstag der Anmeldung: **11.06.2008**
(21) Anmeldenummer: 07022376.3
(22) Anmeldetag: 19.11.2007
(51) Int. Cl.: F16D 13/58

(54) **Reibungskupplung**

(30) Priorität: 07.12.2006 DE 102006058023
(71) Anmelder: LuK Lamellen und Kupplungsbau Beteiligungs KG, 77815 Bühl (DE)
(72) Erfinder: Lindenbaum, Tobias, 76530 Baden-Baden (DE); Ortmann, Matthias, 77645 Offenburg (DE); Meinhard, Rolf, 77815 Bühl (DE); Friedmann, Oswald, 77839 Lichtenau (DE)

(57) **Zusammenfassung**

Eine Reibungskupplung mit einer Druckplatte, die drehfest, jedoch axial begrenzt verlagerbar mit einem Gehäuse verbunden ist, wobei zwischen Gehäuse und Druckplatte ein tellerfederartiges Bauteil vorgesehen ist, das sich einerseits an einem am Gehäuse vorgesehenen, ringartigen Verschwenkbereich abstützt und andererseits zur Beaufschlagung der Druckplatte in Richtung der Reibbeläge einer Kupplungsscheibe dient, weiterhin das tellerfederartige Bauteil axial in Richtung des Verschwenkbereiches unter der Wirkung einer Rückhaltekraft steht, welche durch Federmittel erzeugt wird, die von dem tellerfederartigen Bauteil getragen sind und mit Vorspannung am Gehäuse abgestützt sind, wobei die Federmittel durch eine Ringfeder (9) gebildet sind, welche einen vom Gehäuse (2) axial abgestützten, ringförmigen Grundkörper (10) aufweist, von dem radial nach innen hin verlaufende, elastisch verformbare längliche Laschen (11) ausgehen, die mit dem tellerfederartigen Bauteil (4) zumindest axial verbunden sind.

## Beschreibung

Die Erfindung betrifft eine Reibungskupplung, insbesondere für Kraftfahrzeuge, mit einer Druckplatte, die drehfest, jedoch axial begrenzt verlagerbar mit einem Gehäuse verbunden ist, wobei zwischen Gehäuse und Druckplatte ein tellerfederartiges Bauteil vorgesehen ist, das sich einerseits an einem am Gehäuse vorgesehenen ringartigen Verschwenkbereich abstützt und andererseits zur Beaufschlagung der Druckplatte in Richtung der Reibbeläge einer Kupplungsscheibe dient, weiterhin das tellerfederartige Bauteil axial in Richtung des Schwenkbereiches unter der Wirkung einer Rückstellkraft steht, welche durch Federmittel erzeugt wird, die von dem tellerfederartigen Bauteil getragen sind und mit Vorspannung am Gehäuse abgestützt sind.

Derartige Kupplungen sind beispielsweise durch die US 4,210,233 und die DE 34 33 644 C2 vorgeschlagen worden.

Bei dem bekannten Stand der Technik entsteht jedoch im Bereich der Schwenklagerung des tellerfederartigen Bauteils am Kupplungsgehäuse eine verhältnismäßig hohe Reibungshysterese, wodurch sich der Einrückkraftverlauf und der Ausrückkraftverlauf bei solchen Reibungskupplungen erheblich unterscheiden.

Der vorliegenden Erfindung lag die Aufgabe zugrunde, Reibungskupplungen der eingangs genannten Art zu schaffen, die eine verbesserte Funktion aufweisen, insbesondere bezüglich des zum Öffnen und Schließen solcher Reibungskupplungen erforderlichen Betätigungskraftverlaufes. Weiterhin soll eine einfache und kostengünstige Herstellung derartiger Reibungskupplungen ermöglicht werden.

Die der vorliegenden Erfindung zugrunde liegenden Aufgaben werden unter anderem dadurch erzielt, dass die Federmittel, welche das tellerfederartige Bauteil gegen einen vom Gehäuse getragenen Verschwenkbereich beaufschlagen, durch eine Ringfeder gebildet sind, welche einen vom Gehäuse axial abgestützten, ringförmigen Grundkörper aufweist, von dem radial nach innen hin verlaufende, elastisch verformbare längliche Laschen ausgehen, die mit dem tellerfederartigen Bauteil zumindest axial verbunden sind. Die axialen Verbindungen sind dabei derart ausgestaltet, dass das tellerfederartige Bauteil durch die länglichen Laschen zumindest axial abgestützt wird. Obwohl hierfür eine starre Verbindung, wie zum Beispiel eine Nietverbindung, zwischen den länglichen Laschen und dem tellerfederartigen Bauteil Verwendung finden kann, kann hierfür auch lediglich eine formschlüssige axiale Abstützung benutzt werden, indem beispielsweise Bereiche der länglichen Laschen Bereiche des tellerfederartigen Bauteils axial abstützen.

Besonders vorteilhaft kann es sein, wenn die Verbindungen zwischen den länglichen Laschen und dem tellerfederartigen Bauteil sowohl in radialer als auch in Umfangsrichtung spielfrei, also praktisch starr ausgebildet sind.

In vorteilhafter Weise kann der ringförmige Grundkörper der Ringfeder als Tellerfeder ausgebildet sein. Die länglichen Laschen sind vorzugsweise zumindest in axialer Richtung wirkungsmäßig zwischen dem Gehäuse und dem tellerfederartigen Bauteil federnd verspannt. Die durch die federnde Verspannung der länglichen Laschen auf das tellerfederartige Bauteil ausgeübte axiale Kraft ist vorzugsweise derart bemessen, dass diese über die gesamte Lebensdauer der Reibungskupplung größer ist als die über die Lebensdauer der Reibungskupplung auftretende maximale Betätigungskraft, welche zum Öffnen und Schließen der Reibungskupplung auf das tellerfederartige Bauteil ausgeübt wird.

In vorteilhafter Weise ist der die länglichen Laschen tragende, ringförmige Grundkörper an einem zweiten vom Gehäuse getragenen ringartigen Verschwenkbereich abgestützt. Der erste Verschwenkbereich für das tellerfederartige Bauteil kann in vorteilhafter Weise auf einer axialen Seite des Gehäuses angeordnet sein, wohingegen der zweite Verschwenkbereich für den die länglichen Laschen tragenden, ringförmigen Grundkörper auf der anderen Seite des Gehäuses vorgesehen sein kann.

Ein besonders einfacher und kostengünstiger Aufbau kann dadurch gewährleistet werden, dass der ringförmige Grundkörper und die länglichen Laschen einstückig ausgebildet werden. Für die Funktion der Reibungskupplung kann es besonders vorteilhaft sein, wenn sich die länglichen Laschen, ausgehend vom elastisch verformbaren, ringförmigen Grundkörper, zunächst radial nach innen erstrecken, radial innen einen Umlenkbereich besitzen und anschließend daran radial nach außen verlaufen. Derartige längliche Laschen können eine haarnadelförmige Ausgestaltung besitzen, die federnd bzw. elastisch verformbar ist. Die freien Enden der länglichen Laschen können in vorteilhafter Weise mit dem tellerfederartigen Bauteil fest verbunden sein. Dies kann beispielsweise mittels formschlüssiger Verbindungen, wie zum Beispiel Nietverbindungen, erfolgen. Zur Herstellung solcher Verbindungen kann es zweckmäßig sein, wenn das jeweilige freie Ende derartiger Laschen eine Verbreiterung aufweist.

Das tellerfederartige Bauteil besitzt in vorteilhafter Weise in ringartiger Anordnung vorgesehene Hebelelemente, die untereinander verbunden sind. In besonders einfacher Weise kann das tellerfederartige Bauteil durch eine Tellerfeder gebildet sein, die einen ringförmigen, als Energiespeicher dienenden Grundkörper aufweist, von dessen radial innerem Rand nach innen gerichtete Zungen ausgehen, wobei die Verbindungen zwischen den länglichen Laschen und dem tellerfederartigen Bauteil im Bereich solcher Zungen vorgesehen sein können.

Durch die erfindungsgemäße Lagerung bzw. Halterung eines tellerfederartigen Bauteils an einem Kupplungsgehäuse wird gewährleistet, dass gleitende Relativbewegungen beim Verschwenken des tellerfederartigen Bauteils gegenüber dem Gehäuse vermieden werden. Dies ist darauf zurückzuführen, dass aufgrund des Zusammenwirkens der einzelnen Bauteile, nämlich insbesondere des Gehäuses, des tellerfederartigen Bauteils und der Ringfeder, während einer Verschwenkung des tellerfederartigen Bauteils gegenüber dem Gehäuse keine gleitende Relativbewegungen zwischen diesen Bauteilen auftreten können. Zwischen den vom Gehäuse getragenen Verschwenkbereichen und den sich daran abstützenden Bereichen des tellerfederartigen Bauteils und der Ringfeder erfolgt eine abrollende statt einer gleitenden Relativbewegung beim Betätigen der Reibungskupplung. Die während einer Kupplungsbetätigung erfolgenden bzw. notwendigen Längen- bzw. Bewegungsausgleiche, wie insbesondere Abstandsänderungen bzw. Verlagerungen der Verbindungsstellen zwischen Ringfeder und tellerfederartigem Bauteil relativ zum Kupplungsgehäuse, können durch entsprechende elastische Verformungen der länglichen Laschen ausgeglichen werden. Diese als Torsions- bzw. Biegebalken wirkenden länglichen Laschen werden bei einem Betätigungsvorgang der Reibungskupplung entsprechend verformt, wohingegen der durch den ringförmigen Grundkörper gebildete, geschlossene Kraftrand ähnlich einer Tellerfeder auf den ihm zugeordneten Verschwenkbereich abgerollt wird.

Weitere konstruktive und funktionelle Vorteile einer erfindungsgemäß ausgebildeten Reibungskupplung werden in Zusammenhang mit der folgenden Figurenbeschreibung beschrieben.

Dabei zeigen:
- Figur 1: einen Schnitt durch eine erfindungsgemäß ausgestalte Reibungskupplung,
- Figur 2: die in Figur 1 mit A gekennzeichnete Einzelheit,

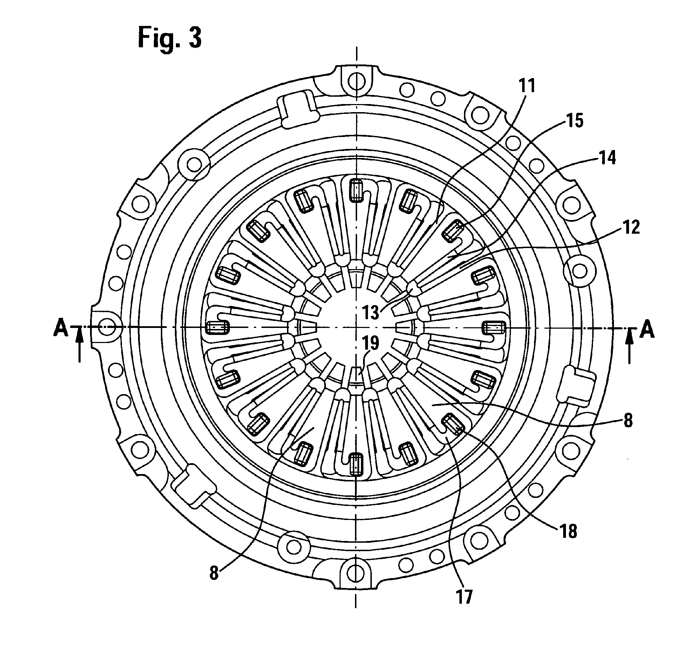

- Figur 3: eine Draufsicht der in Figur 1 dargestellten Reibungskupplung und
- Figur 4: ein ringförmiges Federelement zur Verwendung bei einer Reibungskupplung gemäß den Figuren 1 bis 3.

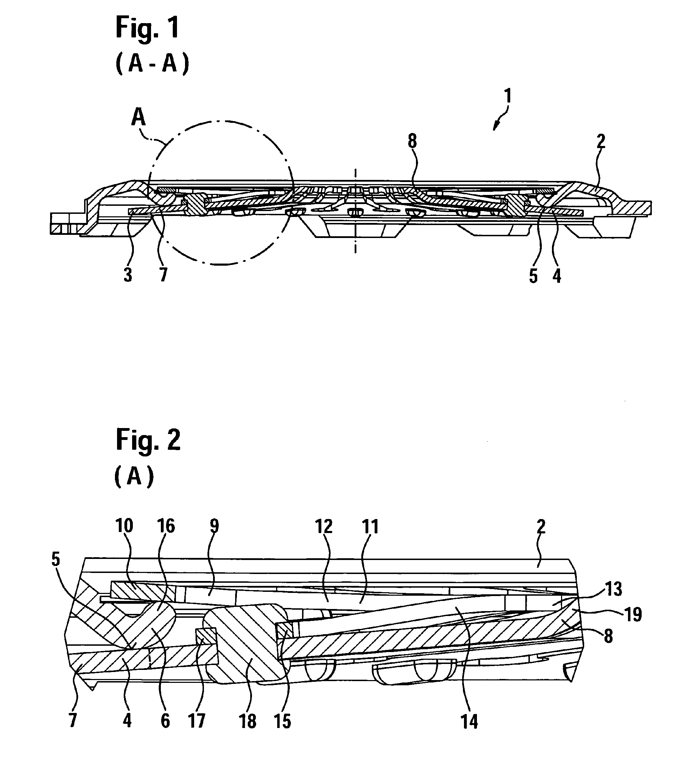

Die in den Figuren dargestellte Reibungskupplung 1 besitzt ein hier aus Blech hergestelltes Gehäuse 2 und eine mit diesem drehfest verbundene, jedoch axial begrenzt verlagerbare Druckscheibe, die hier nicht dargestellt ist. Axial zwischen der Druckscheibe und dem Deckel 2 ist eine Anpresstellerfeder 4 verspannt, die, wie dies insbesondere aus Figur 2 ersichtlich ist, auf radialer Höhe eines deckelseitig vorgesehenen ringförmigen Abstützbereiches 5 nach Art eines zweiarmigen Hebels verschwenkbar ist. Mit radial weiter außen liegenden Bereichen 3 beaufschlagt die Tellerfeder 4 eine Druckscheibe. Die Druckscheibe kann mit dem Gehäuse 2 über in Umfangsrichtung bzw. tangential gerichtete Blattfedern drehfest verbunden sein. Die Reibungskupplung 1 ist auf eine in hier ebenfalls nicht dargestellte Gegendruckplatte montierbar, wobei zwischen der Reibfläche dieser Gegendruckplatte und der Reibfläche der Druckscheibe die Reibbeläge einer Kupplungsscheibe in an sich bekannter Weise einspannbar sind, und zwar aufgrund der durch die Tellerfeder 4 auf die Druckscheibe ausgeübten Axialkraft. Beim Montieren der Reibungskupplung 1 auf die Gegendruckplatte wird die Druckscheibe in den durch den Deckel 2 umschlossenen Raum hineingedrängt, wobei dadurch die Tellerfeder 4 um den Abstützbereich 5 entsprechend verschwenkt wird. Der auf der dem Deckel 2 zugewandten Seite der Tellerfeder 4 vorgesehene ringförmige Abstützbereich 5 ist durch eine ringartige Schwenkauflage 6 gebildet, die bei dem dargestellten Ausführungsbeispiel durch eine Anprägung des das Gehäuse 2 bildenden Blechwerkstoffes gebildet ist.

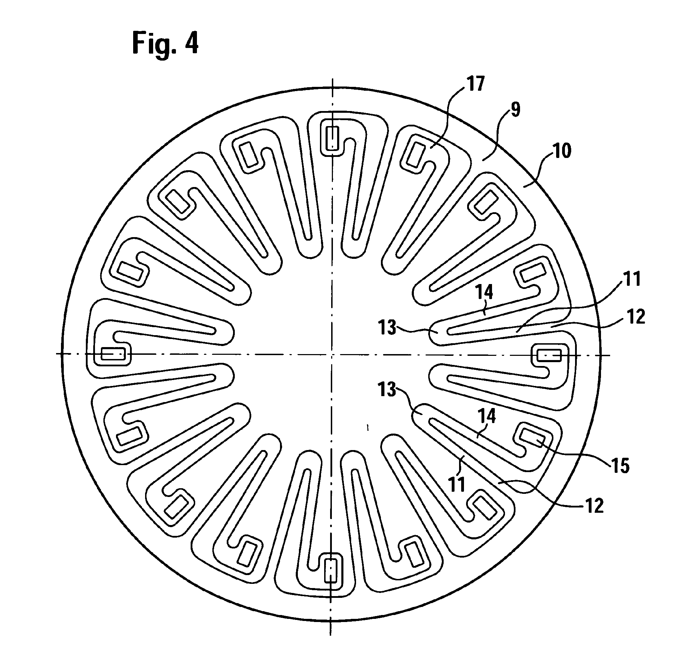

Die Tellerfeder 4 besitzt einen ringförmigen als Energiespeicher dienenden Grundkörper 7, von dessen Innenrand radial nach innen gerichtete Zungen 8 ausgehen, die als Betätigungsmittel dienen. Die Tellerfeder 4 trägt weiterhin in axialer Richtung federnd nachgiebige Federmittel 9, die insbesondere aus Figur 4 erkennbar sind. Die Federmittel 9 stützen sich am Gehäuse 2 axial ab und beaufschlagen bzw. ziehen die Tellerfeder 4 bzw. deren Grundkörper 7 axial in Richtung des Abstützbereiches 5, also axial gegen die ringartige Schwenkauflage 6. Die zumindest axial federnd nachgiebigen Federmittel 9 umfassen bei dem dargestellten Ausführungsbeispiel einen ringförmigen Grundkörper 10, von dem radial nach innen gerichtete längliche Laschen bzw. Zungen 11 ausgehen. Die Laschen bzw. Zungen 11 sind hier schlaufenförmig bzw. haarnadelförmig ausgebildet. Die laschenförmigen Federmittel 9, 11 sind am radial inneren Randbereich des ringförmigen Tellerfedergrundkörpers 10 angeformt. Ausgehend vom elastisch verformbaren Grundkörper 10 erstrecken sich die Laschen 11 über einen Abschnitt 12 zunächst radial nach innen. Der Abschnitt 12 geht in einen Umlenkbereich 13 über, der seinerseits wiederum in einen radial nach außen verlaufenden Abschnitt 14 einmündet. Durch eine derartige Ausgestaltung der laschenartigen Zungen 11 wird eine verhältnismäßig lange Biege- bzw. Torsionsstrecke zwischen jeweils einer Verbindung 15 der Abschnitte 14 mit der Tellerfeder 4 und der gehäuseseitigen Abstützung 16 für den ringförmigen Grundkörper 10 erzielt. Der freie Endbereich 17 der schlaufenförmigen Federmittel 9, 11 ist mit Vorspannung an der Tellerfeder 4 abgestützt. Die Formgebung der laschenförmigen Federmittel 11 sowie der Abstand zwischen der gehäuseseitigen Abstützung 16 für die Federmittel 9 und den Verbindungen 15 mit der Tellerfeder 4 sind dabei derart aufeinander abgestimmt, dass die laschen- bzw. schlaufenförmigen Federmittel 11 sich in einem zumindest axialen verspannten Zustand befinden.

Der freie Endbereich 17 der Federmittel 11, welcher mit der Tellerfeder 4 verbunden ist, ist in Umfangsrichtung verbreitert.

Die freien Endbereiche 17 der schlaufenförmigen Federmittel 11 sind bei dem dargestellten Ausführungsbeispiel mittels Nietverbindungen 18 mit der Tellerfeder 4 fest verbunden. Bei dem dargestellten Ausführungsbeispiel befinden sich die Nietverbindungen 18 im Wurzelbereich der Tellerfederzungen 8. Die Nietverbindungen 18 sind also angrenzend an den Tellerfedergrundkörper 7 vorgesehen. Insbesondere aus Figur 2 ist auch erkennbar, dass die Nietverbindungen 8 radial innerhalb des ringförmigen Tellerfedergrundkörpers 10 angeordnet sind.

Anstatt Nietverbindungen 18 können auch andere Verbindungen verwendet werden, die zumindest eine radial feste Koppelung zwischen den Endbereichen 17 und der Tellerfeder 4 gewährleisten. In vorteilhafter Weise kann zwischen Bereichen der Tellerfeder 4 und den Endbereichen 17 eine Schnappverbindung oder bajonettartige Verbindung vorgesehen werden, die eine zumindest radial feste, vorzugsweise auch umfangsfeste Koppelung zwischen den entsprechenden Bauteilen 4 und 9 gewährleistet. So können beispielsweise die Endbereiche 17 auch derart ausgebildet werden, dass sie Bereiche der Tellerfeder 4 axial hintergreifen können und an der Tellerfeder 4 abgestützt werden. Bei einer derartigen Verbindung kann auch auf zusätzliche Befestigungsmittel, wie die in Figur 2 dargestellten Niete, verzichtet werden. Bei einer derartigen Ausgestaltung können Abschnitte der freien Endbereiche 17 die Tellerfeder 4 auf der dem Gehäuse 2 abgewandten Seite der Tellerfeder 4 mit axialer Vorspannung hintergreifen.

In Abänderung des dargestellten Ausführungsbeispiels könnte auch die Tellerfeder 4 einzelne über den Umfang verteilte, haarnadelförmige bzw. schlaufenförmige Federmittel aufweisen, die zunächst radial nach innen und dann radial nach außen verlaufen. Die Endbereiche der radial nach außen verlaufenden Abschnitte derartigen schlaufenförmiger Federmittel können dann mit axialer Vorspannung am Gehäuse 2 abgestützt und mit diesem fest verbunden sein, zum Beispiel in ähnlicher Weise, wie dies in Zusammenhang mit den Verbindungen zwischen den Endbereichen 17 und der Tellerfeder 4 beschrieben wurde. Die einstückig mit der Tellerfeder 4 ausgebildeten schlaufenförmigen Federmittel haben dabei die gleiche Funktion bzw. Wirkungsweise, wie die schlaufenförmigen Federmittel 11.

Die durch das Federmittel 9 bzw. die laschenförmigen Federmittel 11 aufgebrachte und auf die Tellerfeder 4 einwirkende Rückhaltekraft bzw. axiale Abstützkraft ist in Bezug auf den zum Betätigen der Reibungskupplung 1 im Bereich der Zungenspitzen 19 der Tellerfeder 4 aufzubringenden Kraftverlauf derart abgestimmt, dass über die gesamte Lebensdauer der Reibungskupplung die von dem Federmittel 9 bzw. den schlaufenförmigen Federmitteln 11 aufgebrachte Axialkraft größer ist als die auf die Zungen 19 einwirkende maximale Betätigungskraft. Dadurch wird gewährleistet, dass die Tellerfeder 4 stets in Anlage an dem ringförmigen Abstützbereich 5 bleibt. Beim Verschwenken der Tellerfeder 4 wälzt diese sich an dem ringförmigen Abstützbereich 5 ab. Gleichzeitig wälzt sich der ringförmige Grundkörper 10 an der ringförmigen Abstützung 16 ab. Dadurch wird gewährleistet, dass eine praktisch hysteresefreie Betätigung der Reibungskupplung 1 gewährleistet wird. Die aufgrund der Gesamtgeometrie bzw. des kinematischen Aufbaus notwendigen Ausgleiche in der Relativbewegung der Bauteile, insbesondere der beiden Bauteile 4 und 9, erfolgen mittels der schlaufenförmigen Federmittel 11, welche durch Biege- und/oder Torsionsverformungen die erforderlichen Bewegungen der Bauteile ermöglichen.

Die erfindungsgemäße Schwenklagerung der Tellerfeder 4 am Gehäuse 2 gewährleistet, dass keine gleitenden Relativbewegungen zwischen der gehäuseseitigen Abstützung 16 und dem Tellerfedergrundkörper 10 einerseits sowie zwischen dem ringförmigen Abstützbereich 5 und der Tellerfeder 4 andererseits auftritt.

Die während der Kupplungsbetätigung notwendigen Längenänderungen zwischen den Nietverbindungen 18 und dem ringförmigen Grundkörper 10 werden, wie bereits angedeutet, durch elastische Verformungen, insbesondere der schlaufenförmigen Federmittel 11, ausgeglichen.

In vorteilhafter Weise kann das Federmittel 9 auch zur Zentrierung der Tellerfeder 4 gegenüber dem Gehäuse 2 herangezogen werden. Hierfür kann der ringförmige Grundkörper 10 gegenüber dem Gehäuse 2 in einer zentrierten Lage gehalten werden. Hierfür können beispielsweise einzelne axiale Vorsprünge, wie zum Beispiel Nietwarzen, am Gehäuse 2 vorgesehen werden, die über den Umfang des Gehäuses verteilt sind und mit dem Außenrand des ringförmigen Grundkörpers 10 zusammenwirken.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und der Figurenbeschreibung sowie den Ansprüchen beschriebenen und in den Zeichnungen enthaltenen Merkmalen bzw. Elementen oder Verfahrensschritten gebildet werden können.

### Bezugszeichenliste

- 1: Reibungskupplung
- 2: Gehäuse
- 3: Bereich
- 4: Tellerfeder
- 5: Abstützbereich
- 6: Schwenkauflage
- 7: Grundkörper
- 8: Zungen
- 9: Federmittel
- 10: Grundkörper
- 11: Laschen bzw. Zungen
- 12: Abschnitt
- 13: Umlenkbereich
- 14: Abschnitt
- 15: Verbindung
- 16: Abstützung
- 17: Endbereiche
- 18: Nietverbindungen
- 19: Zungen

## Patentansprüche

1. Reibungskupplung insbesondere für Kraftfahrzeuge, mit einer Druckplatte, die drehfest, jedoch axial begrenzt verlagerbar mit einem Gehäuse verbunden ist, wobei zwischen Gehäuse und Druckplatte ein tellerfederartiges Bauteil vorgesehen ist, das sich einerseits an einem am Gehäuse vorgesehenen, ringartigen Verschwenkbereich abstützt und andererseits zur Beaufschlagung der Druckplatte in Richtung der Reibbeläge einer Kupplungsscheibe dient, weiterhin das tellerfederartige Bauteil axial in Richtung des Verschwenkbereiches unter der Wirkung einer Rückhaltekraft steht, welche durch Federmittel erzeugt wird, die von dem tellerfederartigen Bauteil getragen sind und mit Vorspannung am Gehäuse abgestützt sind, **dadurch gekennzeichnet, dass** die Federmittel durch eine Ringfeder (9) gebildet sind, welche einen vom Gehäuse (2) axial abgestützten, ringförmigen Grundkörper (10) aufweist, von dem radial nach innen hin verlaufende, elastisch verformbare längliche Laschen (11) ausgehen, die mit dem tellerfederartigen Bauteil (4) zumindest axial verbunden sind.

2. Reibungskupplung nach Anspruch 1, **dadurch gekennzeichnet, dass** der ringförmige Grundkörper (10) als Tellerfeder ausgebildet ist.

3. Reibungskupplung nach Anspruch 1 oder 2, **dadurch gekennzeichnet, dass** die länglichen Laschen (11) zumindest in axialer Richtung wirkungsmäßig zwischen dem Gehäuse (2) und dem tellerfederartigen Bauteil (4) federnd verspannt sind.

4. Reibungskupplung nach Anspruch 3, **dadurch gekennzeichnet, dass** die durch die federnde Verspannung der länglichen Laschen (11) auf das tellerfederartige Bauteil (4) ausgeübte axiale Kraft über die gesamte Lebensdauer der Reibungskupplung größer ist als die über die Lebensdauer der Reibungskupplung auftretende, maximale Betätigungskraft, welche zum Öffnen und Schließen der Reibungskupplung (1) auf das tellerfederartige Bauteil (4) ausgeübt wird.

5. Reibungskupplung nach einem der Ansprüche 1 bis 4, **dadurch gekennzeichnet, dass** der die länglichen Laschen (11) tragende ringförmige Grundkörper (10) an einem zweiten, vom Gehäuse (2) getragenen ringartigen Verschwenkbereich (16) abgestützt ist.

6. Reibungskupplung nach einem der Ansprüche 1 bis 5, **dadurch gekennzeichnet, dass** der erste Verschwenkbereich (5) für das tellerfederartige Bauteil (4) auf einer axialen Seite des Gehäuses (2) angeordnet ist und der zweite Verschwenkbereich (16) für den die länglichen Laschen (11) tragenden ringförmigen Grundkörper (10) auf der anderen axialen Seite des Gehäuses (2) vorgesehen ist.

7. Reibungskupplung nach einem der Ansprüche 1 bis 6, **dadurch gekennzeichnet, dass** der ringförmige Grundkörper (10) und die länglichen Laschen (11) einstückig ausgebildet sind.

8. Reibungskupplung nach einem der Ansprüche 1 bis 7, **dadurch gekennzeichnet, dass** sich die länglichen Laschen, ausgehend vom elastisch verformbaren, ringförmigen Grundkörper (10), zunächst radial nach innen erstrecken (12), radial innen einen Umlenkbereich (13) besitzen und anschließend daran radial nach außen verlaufen (14).

9. Reibungskupplung nach Anspruch 8, **dadurch gekennzeichnet, dass** die durch die länglichen Laschen (11) gebildeten laschenartigen Federmittel haarnadelförmig ausgebildet sind.

10. Reibungskupplung nach einem der Ansprüche 1 bis 9, **dadurch gekennzeichnet, dass** die länglichen Laschen (11) an ihrem freien Ende (17) eine Verbreiterung aufweisen.

11. Reibungskupplung nach einem der Ansprüche 1 bis 10, **dadurch gekennzeichnet, dass** die freien Enden (17) der länglichen Laschen mit dem tellerfederartigen Bauteil (4) fest verbunden sind.

12. Reibungskupplung nach wenigstens einem der vorhergehenden Ansprüche, **dadurch gekennzeichnet, dass** das tellerfederartige Bauteil (4) einen ringförmigen, als Energiespeicher dienenden Grundkörper (7) aufweist, von dessen radial inneren Rand nach innen gerichtete Zungen (8) ausgehen, wobei die Verbindungen (18) zwischen den länglichen Laschen (11) und dem tellerfederartigen Bauteil (4) im Bereich solcher Zungen (8) vorgesehen sind.
